# EUROPÄISCHE PATENTSCHRIFT

(11) **EP 4 420 833 B1**
(45) Veröffentlichungstag und Bekanntmachung des Hinweises auf die Patenterteilung: **09.12.2026**
(21) Anmeldenummer: 24157342.7
(22) Anmeldetag: 13.02.2024
(51) Int. Cl.: B25B 23/10

(54) **SCHRAUBENSTÜTZSTRUKTUR FÜR EIN SCHRAUBWERKZEUG UND WERKZEUGSYSTEM**
SCREW SUPPORT STRUCTURE FOR A SCREW TOOL AND TOOL SYSTEM
STRUCTURE DE SUPPORT DE VIS POUR OUTIL DE VISSAGE ET SYSTÈME D'OUTIL

(30) Priorität: 22.02.2023 DE 102023201572
(43) Veröffentlichungstag der Anmeldung: 28.08.2024
(73) Patentinhaber: Adolf Würth GmbH & Co. KG, 74653 Künzelsau (DE); Würth International AG, 7000 Chur (CH)
(72) Erfinder: ECKERT, Matthias, 76131 Karlsruhe (DE); HANKE, Aaron, 76133 Karlsruhe (DE); PUCH, Carlos Rodrigo Urbina, 76131 Karlsruhe (DE); SEEGER, Tom, 76137 Karlsruhe (DE); STUMMBILLIG, Niklas, 76135 Karlsruhe (DE); VÖLK, Thomas Alexander, 76135 Karlsruhe (DE)
(74) Vertreter: Patentanwälte Ruff, Wilhelm, Beier, Dauster & Partner mbB

(56) Entgegenhaltungen:
- DE-C- 925 459
- DE-U- 1 885 194
- US-A- 4 526 072
- US-A- 6 116 125
- US-B1- 6 701 812

## Beschreibung

Die Erfindung betrifft eine Schraubenstützstruktur für ein Schraubwerkzeug mit einem Sicherungsring zur lösbaren Festlegung der Schraubenstützstruktur an dem Schraubwerkzeug, sowie mit elastisch nachgiebigen Stützzungen zur Stützung eines Schraubenkopfs einer Schraube für ein Einschrauben der Schraube in ein Werkstück, wobei die Stützzungen an einer Ringstruktur in Umfangsrichtung verteilt zueinander angeordnet und radial von außen her zu einer Schraubachse hin nach innen gerichtet sind.

Die Erfindung betrifft zudem ein Werkzeugsystem mit einem Schraubwerkzeug und mit wenigstens einer derartigen Schraubenstützstruktur.

Aus der DE 10 2009 003 404 A1 ist eine Schraubenstützstruktur für ein Schraubwerkzeug in Form eines Schraubendrehers bekannt. Die bekannte Schraubenstützstruktur weist eine Sicherungshülse auf, die auf eine Klinge des Schraubendrehers kraftschlüssig aufschiebbar ist. Auf der Sicherungshülse ist eine Ringstruktur drehbar und axial begrenzt verschiebbar gelagert, an der mehrere über den Umfang der Ringstruktur verteilt angeordnete Stützzungen angeformt sind. Die Stützzungen sind mit Haltebacken versehen, die radial nach außen elastisch ausbiegbar sind. Die axiale Verlagerbarkeit der Ringstruktur auf der Sicherungshülse ermöglicht eine axiale Fixierung eines durch die Haltebacken gehaltenen Schraubkopfs an einer Klingenspitze des Schraubendrehers.

Die US 10,710,221 B2 offenbart ein Werkzeugsystem mit einem elektrisch angetriebenen Schraubwerkzeug sowie mit einer Schraubenstützstruktur, die in dem Schraubwerkzeug integriert ist. Die Schraubenstützstruktur weist mehrere relativ zu einer Schraubachse in Aussparungen einer Hülse radial bewegliche Rückhaltekugeln auf, die durch eine außenliegende Schiebehülse radial nach innen bewegt oder für eine Bewegung radial nach außen freigegeben werden. In ihrer radial nach innen bewegten Stellung hintergreifen die Rückhaltekugeln einen Schraubenkopf einer entsprechenden Schraube, die mittels des Schraubwerkzeugs in ein Werkstück eingeschraubt werden soll. US6116125A offenbart eine Schraubenstützstruktur gemäß Oberbegriff des Anspruchs 1. US4526072A offenbart eine andere Variante einer Schraubenstützstruktur.

Aufgabe der Erfindung ist es, eine Schraubenstützstruktur und ein Werkzeugsystem der eingangs genannten Art zu schaffen, die einfach aufgebaut sind und eine Einhandbedienung des Schraubwerkzeugs beim Einschrauben einer entsprechenden Schraube ermöglichen.

Diese Aufgabe wird für die Schraubenstützstruktur dadurch gelöst, dass der Sicherungsring und die Ringstruktur drehfest zueinander angeordnet sind, und dass die Stützzungen derart frei radial nach innen zu der Schraubachse hin abragen, dass sie bei einer relativen Axialbewegung zwischen der Schraube und der Ringstruktur axial elastisch deformiert werden. Die Begriffe "axial" und "radial" sind auf eine Schraubachse des Schraubwerkzeugs bei an dem Schraubwerkzeug montierter Schraubenstützstruktur bezogen. Die Schraubachse entspricht einer Mittellängsachse der Schraubenstützstruktur, die durch einen Mittelpunkt des Sicherungsrings und einen Mittelpunkt der Ringstruktur verläuft. Die Stützzungen ragen von der Ringstruktur in unbelastetem Ausgangszustand in wenigstens einer Radialebene zu dem Mittelpunkt der Ringstruktur hin ab. Dabei sind die Stützzungen radial außen an der Ringstruktur gehalten. Im Bereich der Schraubachse, d.h. im Bereich des Mittelpunkts der Ringstruktur, ergibt sich ein Freiraum, den freie Stirnenden der Stützzungen umgrenzen. Beim Einsetzen einer Schraube in die Schraubenstützstruktur krümmen die Stützzungen sich in axialer Richtung elastisch, wobei die Schraube bei an dem Schraubwerkzeug montierter Schraubenstützstruktur von vorne her, d.h. von einer dem Schraubwerkzeug axial abgewandten Stirnseite her, in die Schraubenstützstruktur eingesetzt wird. Beim Einsetzen der Schraube drückt ein Schraubenkopf axial gegen die freien Enden der Stützzungen, wodurch diese sich in Einsetzrichtung der Schraube elastisch biegen und hinter dem Schraubenkopf zurückgleiten unter axialer Stützung einer dem Schraubgewinde zugewandten Unterseite des Schraubenkopfs. Entsprechende Werkzeugangriffsflächen des Schraubenkopfs sind in der eingesetzten Position der Schraube formschlüssig mit einem Werkzeugkopf des Schraubwerkzeugs in Kontakt. Je nach Ausgestaltung der Werkzeugangriffsflächen kann dies ein Schlitzwerkzeugkopf, ein Kreuzschlitzwerkzeugkopf, ein Torx-Werkzeugkopf, ein Sechskant-Werkzeugkopf oder Ähnliches sein. Der jeweilige Werkzeugkopf kann durch ein Bit bereitgestellt sein, das in dem Schraubwerkzeug aufgenommen ist. Der Werkzeugkopf kann auch einstückig an einem Trägerprofil oder einer Trägerklinge des Schraubwerkzeugs angeordnet sein. Geeignete Schraubwerkzeuge für die erfindungsgemäße Schraubenstützstruktur sind demzufolge sowohl manuell bedienbare Schraubendreher als auch elektrisch oder in anderer Form angetriebene Schraubwerkzeuge, vorzugsweise Bithalter.

In Ausgestaltung der Erfindung sind der Sicherungsring und die Ringstruktur formsteif ausgeführt. Vorteilhaft sind der Sicherungsring und die Ringstruktur aus einem Kunststoffmaterial hergestellt, vorzugsweise aus einem thermoplastischen Kunststoffmaterial.

In weiterer Ausgestaltung der Erfindung sind der Sicherungsring und die Ringstruktur einstückig zueinander gestaltet. Vorteilhaft sind der Sicherungsring und die Ringstruktur aus einem identischen Kunststoffmaterial hergestellt. Es ist auch möglich, den Sicherungsring und die Ringstruktur aus unterschiedlichen Kunststoffmaterialien herzustellen.

In weiterer Ausgestaltung der Erfindung sind die Stützzungen einstückig an der Ringstruktur angeformt. Dadurch ist eine besonders einfache Herstellung und Handhabung der Schraubenstützstruktur gewährleistet.

Erfindungsgemäß sind die radial nach innen ragenden Stützzungen in wenigstens zwei zueinander parallelen Radialebenen an der Ringstruktur angeordnet. Eine Anordnung der Stützzungen in wenigstens zwei zueinander parallelen Radialebenen ermöglicht die variable Stützung von Schrauben mit unterschiedlichen Schraubendurchmessern und Schraubenköpfen.

In weiterer Ausgestaltung der Erfindung weist die Ringstruktur einen größeren Durchmesser auf als der Sicherungsring. Dadurch wird im Bereich der Ringstruktur genügend Raum in der wenigstens einen Radialebene der Stützzungen geschaffen, um eine elastische Biegung bei eingesetzten Schrauben zu erzielen. Der Durchmesser des Sicherungsrings ist vorzugsweise auf einen Außendurchmesser eines Werkzeugabschnitts des Schraubwerkzeugs abgestimmt, mit dem der Sicherungsring für eine Montage der Schraubenstützstruktur an dem Schraubwerkzeug zu verbinden ist.

In weiterer Ausgestaltung der Erfindung ist der Sicherungsring mit Halteprofilierungen zur lösbaren Verbindung des Sicherungsrings an komplementären Halteprofilierungen eines Gehäuseteils des Schraubwerkzeugs versehen. Vorzugsweise sind die Halteprofilierungen als Bajonettverschlussprofilierungen ausgebildet, so dass ein einfaches manuelles Montieren oder Demontieren der Schraubenstützstruktur an einem entsprechenden Gehäuseteil des Schraubwerkzeugs ermöglicht ist. Als Gehäuseteil wird ein geeigneter Abschnitt des Schraubwerkzeugs angesehen, der eine sichere Montage und Demontage der Schraubenstützstruktur ermöglicht.

In weiterer Ausgestaltung der Erfindung ragen die Stützzungen zu einer Mitte der Ringstruktur hin frei radial ab, und freie Stirnenden der Stützzungen umgrenzen einen Freiraum, dessen Durchmesser kleiner als ein Durchmesser des Schraubenkopfs einer zu stützenden Schraube ist. Dadurch wird ein Hindurchstecken und damit Einsetzen einer Schraube in die Schraubenstützstruktur und eine sichere radiale und axiale Stützung einer Unterseite des Schraubenkopfs der Schraube ermöglicht.

In weiterer Ausgestaltung der Erfindung weist die Ringstruktur mit den daran angebrachten Stützzungen einen veränderbaren Durchmesser auf, der vorzugsweise stufenlos oder stufenweise verstellbar ausgeführt ist. Vorzugsweise weist die Ringstruktur mehrere, relativ zueinander in Umfangsrichtung verstellbare Ringabschnitte auf, durch die eine Ringstruktur mit veränderbarem Durchmesser erzielbar ist. Die Ringstruktur ist bei einer solchen Ausgestaltung vorzugsweise mehrteilig gestaltet, wobei die Teile der Ringstruktur relativ zueinander beweglich gelagert sind. Zur Veränderung des Durchmessers ist vorteilhaft ein Stellelement vorgesehen, das als außenseitig angeordnete Schraubhülse ausgeführt sein kann, die auf einem mit Außengewindeabschnitten versehenen Außenumfang der Ringabschnitte koaxial schraubbar angeordnet ist. Dabei ragen die Ringabschnitte vorzugsweise konisch nach außen, so dass eine Schraubverdrehung der Schraubhülse die konischen Ringabschnitte elastisch radial nach innen oder außen verlagert.

Für das Werkzeugsystem der eingangs genannten Art, bei dem die Schraubenstützstruktur lösbar mit dem Schraubwerkzeug verbindbar ist, wird die der Erfindung zugrunde liegende Aufgabe dadurch gelöst, dass das Schraubwerkzeug zur Aufnahme eines Schraubbits einen Bitträger aufweist, der relativ zu einer Trägerachse des Schraubwerkzeugs federkraftbeaufschlagt axial beweglich gelagert ist. Dadurch kann eine entsprechende Schraube mit ihrem mit dem Schraubbit gekoppelten Kopf in eingesetztem Zustand in der Schraubenstützstruktur zwischen den elastisch axial stützenden Stützzungen und dem Schraubbit aufgrund der federkraftbeaufschlagten axialen Beweglichkeit des Bitträgersim Gleichgewicht gehalten werden, ohne dass die Schraube manuell gestützt werden muss. Das erfindungsgemäße Werkzeugsystem ermöglicht demzufolge eine Einhandbedienung des Schraubwerkzeugs beim Einschrauben einer Schraube in ein Werkstück. Zudem ist durch das erfindungsgemäße Werkzeugsystem auch ein schiefwinkliges Einschrauben einer Schraube ermöglicht. Das Schraubwerkzeug kann als Bithalter ausgeführt sein, der in ein Spannfutter einer elektrisch betätigbaren Schraub- oder Bohrmaschine einspannbar ist

In Ausgestaltung des Werkzeugsystems ist ein axialer Abstand der Stützzungen zu dem Bitträger in montiertem Zustand der Schraubenstützstruktur derart gewählt, dass ein Schraubenkopf einer axial durch die Stützzungen hindurchgeschobenen Schraube in Eingriff mit dem Schraubbit in dem Bitträger ist derart, dass eine Federkraft des federkraftbeaufschlagten Bitträgers das Schraubbit und den Schraubenkopf axial gegen die Stützzungen gedrückt hält. Hierdurch ist das zuvor bereits beschriebene Kräftegleichgewicht erzielbar.

In weiterer Ausgestaltung der Erfindung sind mehrere Schraubenstützstrukturen mit zueinander identischen Sicherungsringen und mit zueinander unterschiedlichen Stützzungen zur Stützung unterschiedlicher Schrauben vorgesehen, die alternativ zueinander mit dem Schraubwerkzeug lösbar verbindbar sind. Je nach Schraubendurchmesser und/oder Schraubenkopfvariante wird jeweils die passende Schraubenstützstruktur mit dem Schraubwerkzeug verbunden. Da die unterschiedlichen Schraubenstützstrukturen zueinander identische Sicherungsringe aufweisen, können sie wahlweise auf das entsprechende Schraubwerkzeug montiert werden. Unterschiedliche Schraubköpfe können insbesondere ein Senkfrästaschenkopf, ein Tellerkopf oder ein Zylinderkopf sein. Die Schrauben können zudem unterschiedliche Längen und unterschiedliche Schraubgewindegestaltungen aufweisen. Für das Werkzeugsystem ergibt sich eine Modulbauweise, da das Schraubwerkzeug modular mit der für den jeweiligen Einsatzzweck passenden Schraubenstützstruktur adaptiert werden kann.

In weiterer Ausgestaltung der Erfindung weist das Schraubwerkzeug einen außenseitigen Hülsenabschnitt auf, der mit den zu den Halteprofilierungen des Sicherungsrings der Schraubenstützstruktur komplementären Halteprofilierungen versehen ist. Der Hülsenabschnitt stellt ein Gehäuseteil des Schraubwerkzeugs dar. Der Hülsenabschnitt kann relativ zu einer rotierbaren Schraubachse des Schraubwerkzeugs stationär gehalten sein.

In weiterer Ausgestaltung der Erfindung ist der Hülsenabschnitt relativ zu der Trägerachse des Schraubwerkzeugs federelastisch axial nachgiebig ausgeführt. Dies ermöglicht in besonders vorteilhafter Weise ein schiefwinkliges Einschrauben einer entsprechenden Schraube.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in perspektivischer Darstellung eine Ausführungsform einer erfindungsgemäßen Schraubenstützstruktur,
- Fig. 2: einen Längsschnitt durch die Schraubenstützstruktur nach Fig. 1,
- Fig. 3a bis 3c: in unterschiedlichen Ansichten von unten, von der Seite und von oben eine weitere Ausführungsform einer erfindungsgemäßen Schraubenstützstruktur,
- Fig. 4a bis 4c: eine weitere Ausführungsform einer erfindungsgemäßen Schraubenstützstruktur in drei unterschiedlichen Ansichten analog Fig. 3a bis 3c,
- Fig. 5a bis 5c: in drei unterschiedlichen Ansichten die Schraubenstützstruktur gemäß Fig. 1,
- Fig. 6a bis 6c: in drei unterschiedlichen Ansichten eine weitere Ausführungsform einer erfindungsgemäßen Schraubenstützstruktur,
- Fig. 7a bis 7c: in drei unterschiedlichen Ansichten eine weitere Ausführungsform einer erfindungsgemäßen Schraubenstützstruktur,
- Fig. 8: in perspektivischer Darstellung eine Ausführungsform eines erfindungsgemäßen Werkzeugsystems mit einem Schraubwerkzeug und einer an dem Schraubwerkzeug montierten Schraubenstützstruktur der Fig. 7a bis 7c,
- Fig. 9: in vergrößerter Längsschnittdarstellung das Werkzeugsystem gemäß Fig. 8,
- Fig. 10: in einer stirnseitigen Ansicht das Schraubwerkzeug gemäß den Fig. 8 und 9,
- Fig. 11: in einer Seitenansicht das Schraubwerkzeug gemäß den Fig. 8 bis 10,
- Fig. 12: ein Beispiel (nicht gemäß der beanspruchten Erfindung) einer Schraubenstützstruktur mit veränderbarem Durchmesser in perspektivischer Darstellung und
- Fig. 13: einen Längsschnitt durch die Schraubenstruktur gemäß Fig. 12.

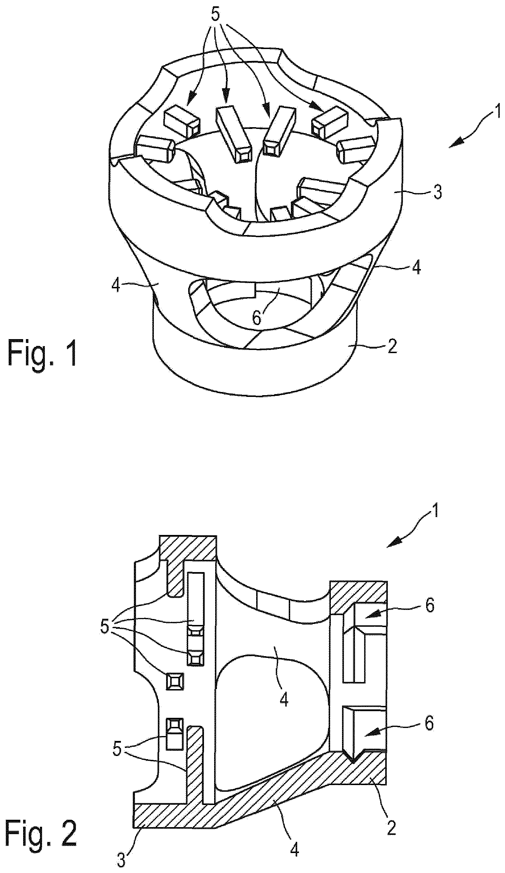

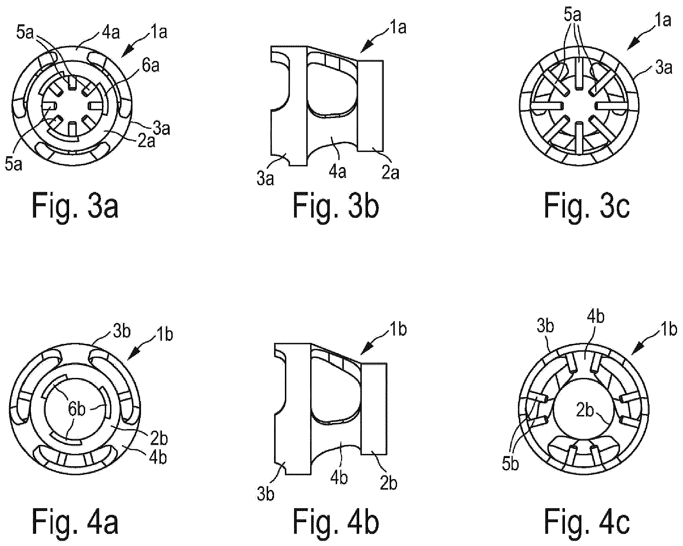

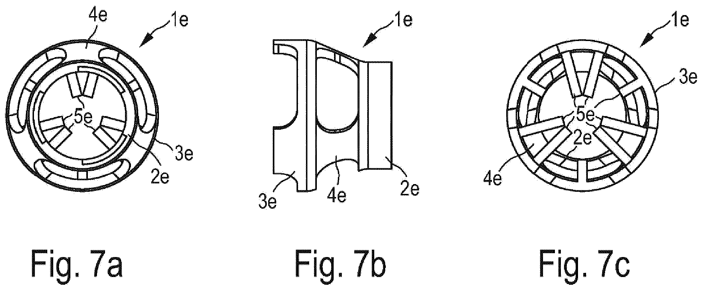

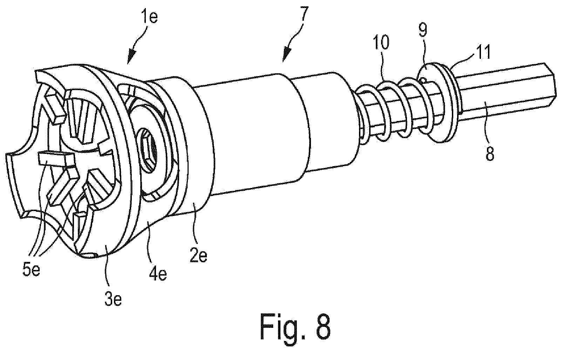

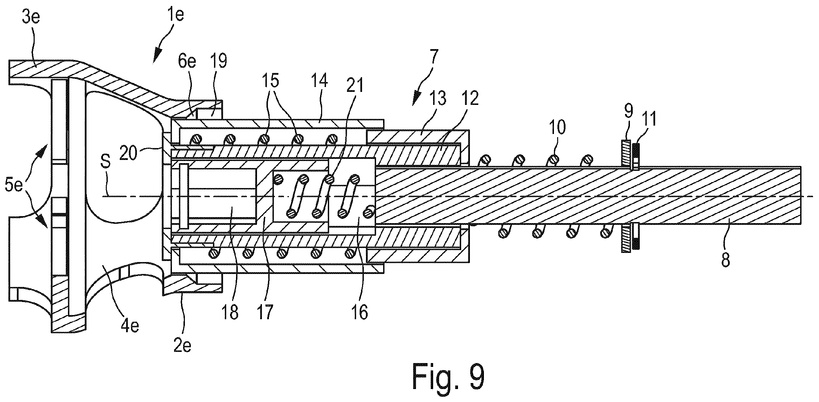

Eine Schraubenstützstruktur 1 gemäß den Fig. 1 und 2 ist zur Stützung und Sicherung einer Schraube während eines Einschraubvorgangs in ein Werkstück mittels eines Schraubwerkzeugs vorgesehen. Anhand der Fig. 8 bis 11 ist ein entsprechendes Schraubwerkzeug 7 vorgesehen, das beim dargestellten Ausführungsbeispiel als Schraubbithalter ausgeführt ist, der in eine Bohr- oder Schraubmaschine oder eine ähnliche angetriebene und vorzugsweise handgeführte Werkzeugmaschine eingespannt wird. Die Schraubenstützstruktur 1 gemäß den Fig. 1 und 2 ist in nachfolgend näher beschriebener Weise auf dem Schraubwerkzeug 7 gemäß den Fig. 8 bis 11 montierbar. Alternativ sind auf dem Schraubwerkzeug 7 auch andere erfindungsgemäße Ausführungsformen einer Schraubenstützstruktur 1a bis 1e lösbar montierbar, wie sie anhand der Fig. 3a bis 7c dargestellt und nachfolgend näher beschrieben sind. In der Darstellung gemäß Fig. 8 ist die Schraubenstützstruktur 1e gemäß der Ausführungsform nach den Fig. 7a bis 7c auf dem Schraubwerkzeug 7 montiert, wie auch anhand des Längsschnitts gemäß Fig. 9 erkennbar ist. Alle anderen erfindungsgemäßen Varianten von Schraubenstützstrukturen 1, 1a bis 1d sind jedoch in gleicher Weise an dem Schraubwerkzeug 7 montierbar oder von diesem wieder demontierbar.

Die Schraubenstützstruktur 1 gemäß den Fig. 1 und 2 ist - wie auch die übrigen erfindungsgemäßen Varianten von Schraubenstützstrukturen 1a bis 1e - aus einem thermoplastischen Kunststoffmaterial als einstückiges Bauteil hergestellt. Die Schraubenstützstruktur 1 weist einen Sicherungsring 2 auf, der mithilfe von Trägerstegen 4 mit einer Ringstruktur 3 verbunden ist, die gegenüber dem Sicherungsring 2 einen größeren Durchmesser aufweist. Sowohl der Sicherungsring 2 als auch die Ringstruktur 3 weisen jeweils eine zylindrische Außenkontur auf, die koaxial zu einer Mittellängsachse der Schraubenstützstruktur 1 gestaltet ist, die einer Schraubachse S des Schraubwerkzeugs 7 (Fig. 9) entspricht, sobald die Schraubenstützstruktur 1 betriebsfertig an dem Schraubwerkzeug 7 montiert ist. Die Trägerstege 4 sind in Umfangsrichtung zueinander beabstandet und zwischen dem Sicherungsring 2 und der Ringstruktur 3 konisch ausgeführt. Zwischen den in Umfangsrichtung zueinander beabstandeten Trägerstegen 4 ergeben sich großflächige Aussparungen, die zur Gewichtseinsparung der Schraubenstützstruktur 1 vorgesehen sind. Die Ringstruktur 3, die Trägerstege 4 und der Sicherungsring 2 sind formsteif zueinander ausgeführt. Der Sicherungsring 2 ist an seiner dem Schraubwerkzeug 7 zugewandten Stirnseite mit Halteprofilierungen in Form von Bajonettverschlussprofilierungen 6 versehen, die als Bajonettverschlussnuten ausgeführt sind. Das Schraubwerkzeug 7 weist hierzu komplementäre Halteprofilierungen in Form von Bajonettverschlussprofilierungen 19 auf, die nachfolgend näher beschrieben werden und die als Bajonettverschlussnocken von einem Außenumfang eines Hülsenteils 14 des Schraubwerkzeugs 7 radial zur Schraubachse S nach außen abragen. Die zueinander komplementären Bajonettverschlussprofilierungen 6 und 19 sind derart gestaltet, dass die jeweilige Behältnisstützstruktur 1 mit ihrem Sicherungsring 2 axial über eine Stirnfläche des Hülsenteils 14 des Schraubwerkzeugs 7 geschoben und anschließend von Hand in Umfangsrichtung verdreht wird, bis die Bajonettverschlussnocken 19 die in Umfangsrichtung erstreckten Nutabschnitte der Bajonettverschlussnuten 6 axial hintergreifen.

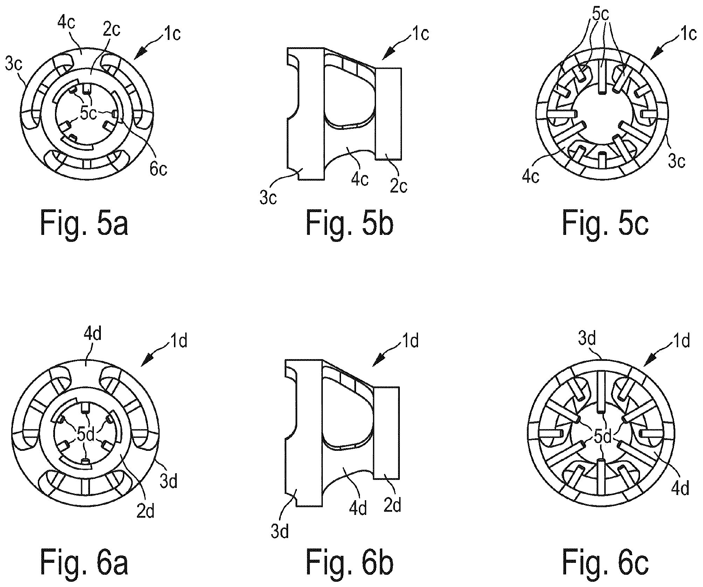

Die im Wesentlichen zylindermantelförmige Ringstruktur 3 ist im Bereich einer Mantelinnenwandung mit radial zur Mittellängsachse der Schraubenstützstruktur 1 nach innen abragenden Stützzungen 5 versehen, die über den Umfang der zylinderartigen Ringstruktur 3 gleichmäßig verteilt angeordnet sind. Anhand der Fig. 1 und 5a bis 5c ist erkennbar, dass die Stützzungen 5 als vierkantige Stege mit gleichen Querschnitten, aber unterschiedlichen Längen ausgeführt sind. Zudem ist erkennbar, dass die Stützzungen 5 in zwei unterschiedlichen Radialebenen relativ zur Ringstruktur 3 angeordnet sind. Alle Stützzungen 5 sind einstückig an der Innenwandung der Ringstruktur 3 angeformt. Alle Stützzungen 5 sind zudem in Axialrichtung der Schraubachse S elastisch biegbar ausgeführt, wobei sie in unbelasteter Ausgangslage - wie anhand der Fig. 1, 2 und 5a bis 5c gezeigt - geradlinig in der jeweiligen Radialebene ausgerichtet sind.

Die Schraubenstützstruktur 1 gemäß den Fig. 1 und 2 und die Schraubenstützstruktur 1c gemäß den Fig. 5a bis 5c sind identisch zueinander ausgeführt. Die Schraubenstützstrukturen 1a, 1b, 1d und 1e gemäß den Fig. 3a bis 3c, 4a bis 4c, 6a bis 6c und 7a bis 7c sind bezüglich des grundsätzlichen Aufbaus identisch gestaltet zu der Schraubenstützstruktur 1, 1c. Entsprechend bau- oder funktionsgleiche Teile oder Abschnitte sind mit gleichen Bezugszeichen unter Hinzufügung des jeweiligen Variantenbuchstabens a, b, d, e versehen. Die Schraubenstützstrukturen 1a, 1b, 1d, 1e unterscheiden sich lediglich bezüglich Anzahl, Anordnung und Dimensionierung der entsprechenden Stützzungen 5a, 5b, 5d, 5e.

Allen Varianten von Schraubenstützstrukturen 1, 1a bis 1e ist gemeinsam, dass der jeweilige Sicherungsring 2, 2a bis 2e zur lösbaren Montage an dem Schraubwerkzeug 7 vorgesehen ist. Allen Schraubenstützstrukturen 1, 1a bis 1e ist zudem gemeinsam, dass die radial abragenden Stützzungen 5, 5a bis 5e koaxial zur Mittellängsachse, d.h. zur Schraubachse S, einen Freiraum umgrenzen, durch den eine entsprechende Schraube in der Schraubenstützstruktur koaxial zur Schraubachse S zentriert ist. Der Durchmesser des entsprechenden Freiraums ist abgestimmt auf Durchmesser unterschiedlicher Schraubenköpfe unterschiedlicher Schrauben. Die dargestellten Schraubenstützstrukturen 1, 1a bis 1e sind für unterschiedliche Arten von Schrauben einsetzbar mit unterschiedlichen Längen, unterschiedlichen Schraubgewindedurchmessern und unterschiedlichen Schraubenköpfen. Die dargestellten Schraubenstützstrukturen 1, 1a bis 1e sind insbesondere für Zylinderkopfschrauben, für Tellerkopfschrauben oder für Senkfrästaschenkopfschrauben vorgesehen. Die Schraubenstützstruktur 1d gemäß den Fig. 6a bis 6c ist zur Stützung und Sicherung von unterschiedlichen Schrauben mit unterschiedlichen Schraubenköpfen vorgesehen, so dass sich bezüglich dieser Schraubenstützstruktur 1d ein Mehrzweckhalter ergibt. Diese Variante der Schraubenstützstruktur 1d ist für Schrauben mit Senkfrästaschenkopf und mit Tellerkopf vorgesehen.

Die Schraubenstützstruktur 1 ist mit mehreren, unterschiedlich langen Stützzungen 5 in zwei unterschiedlichen Radialebenen vorgesehen, so dass hierdurch mehrere unterschiedliche Schraubenköpfe gestützt werden können. Die unterschiedlichen Stützzungen 5 in zwei axial zueinander versetzten Radialebenen ermöglichen insbesondere eine axiale Verklemmung eines Tellerkopfs einer entsprechenden Tellerkopfschraube zwischen den Stützzungen 5 der beiden axial zueinander versetzten Radialebenen.

Alle Schraubenstützstrukturen 1 bis 1e sind im Bereich einer von dem Sicherungsring 2 abgewandten Stirnseite der Ringstruktur 3 mit gegenüber der Stirnfläche der Ringstruktur 3 axial abgesenkten Ausnehmungen versehen, so dass die entsprechende Stirnfläche der Ringstruktur 3 in montiertem Zustand an dem Schraubwerkzeug 7 und bei entsprechend eingesetzter Schraube nicht über den gesamten Umfang auf eine Werkstückoberfläche auftrifft, wenn die Schraube mittels des Schraubwerkzeugs 7 eingeschraubt wird.

Das Schraubwerkzeug 7 weist eine Trägerwelle 8 mit sechskantförmigem Querschnitt auf, die in ein Spannfutter einer handgeführten Schraub- oder Bohrmaschine eingespannt werden kann. Die Schraub- oder Bohrmaschine ist mit einem elektrischen Rotationsantrieb versehen, der akku- oder netzbetrieben sein kann. Die Trägerwelle 8 wird mit ihrem proximalen Stirnende in das Spannfutter der Bohr- oder Schraubmaschine eingespannt. Auf die Trägerwelle 8 ist drehfest und axialfest eine Trägerhülse 12 aufgebracht, wobei die Trägerwelle 8 in der Trägerhülse 12 endet. Vorteilhaft ist die Trägerhülse 12 auf ein Stirnende der Trägerwelle 8 aufgepresst. Die Trägerhülse 12 ist auf einer zur Trägerwelle 8 distalen Seite mit einer zur distalen Stirnseite hin offenen, sechskantförmigen Führungsaufnahme 16 für einen Bitträger 17 versehen. Der Bitträger 17 ist mittels eines sechskantförmigen Außenmantels axial gleitbeweglich in der Trägeraufnahme 16, jedoch drehfest zur Trägeraufnahme 16 geführt. Der Bitträger 17 ist mit einer zur distalen Stirnseite des Schraubwerkzeugs 7 hin offenen Bitaufnahme 18 versehen, in die ein Schraubbit lösbar einsteckbar ist. Der Bitträger 17 ist durch eine Schraubendruckfeder 21 axial federkraftbeaufschlagt in Richtung des distalen Stirnendes des Schraubwerkzeugs 7.

Ein fest mit der Trägerhülse 12 verbundener Anschlagring 20 begrenzt eine Axialbeweglichkeit des Bitträgers 17 in der Trägeraufnahme 16. Der Anschlagring 20 ist stirnseitig an dem distalen Endabschnitt des Schraubwerkzeugs 7 vorgesehen.

Auf der Trägerhülse 12 ist proximal eine Stützhülse 13 axial verschiebbar gelagert gegen eine axial wirkende Druckfederkraft einer Schraubendruckfeder 10, die die Trägerwelle 8 koaxial umschließt. Die Schraubendruckfeder 10 ist an dem der Stützhülse 13 gegenüberliegenden Stirnende an einem Stützring 9 abgestützt, der wiederum mittels eines Axialanschlags 11 in Form eines Sprengrings zum proximalen Stirnende der Trägerwelle 8 hin axial abgestützt ist.

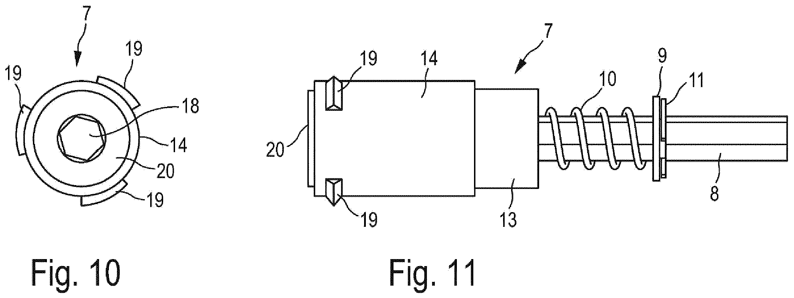

Die Schraubendruckfeder 10 stützt demzufolge die Stützhülse 13 in Richtung der Trägerhülse 12 ab. Auf der Stützhülse 13 ist ein als Außenhülse dienendes Hülsenteil 14 axial beweglich gelagert, das zusätzlich auf dem Außenmantel der Trägerhülse 12 axial beweglich gelagert ist. Das Hülsenteil 14 ist mittels einer weiteren Schraubendruckfeder 15, die den Außenmantel der Trägerhülse 12 koaxial umschließt, relativ zu der Trägerhülse 12 und relativ zu der Stützhülse 13 axial beweglich gelagert. Auf dem Außenmantel des Hülsenteils 14 sind insgesamt drei Bajonettverschlussnocken 19 (Fig. 10) über den Umfang des Außenmantels des Hülsenteils 14 verteilt angeordnet und fest mit dem Hülsenteil 14 verbunden. Auf diesen Bajonettverschlussnocken 19 wird die jeweilige Schraubenstützstruktur 1e gemäß den Fig. 8 und 9 lösbar fixiert, wie zuvor bereits ausgeführt wurde.

Nach dem Aufsetzen und Sichern der entsprechenden Schraubenstützstruktur 1 bis 1e auf dem Hülsenteil 14 des Schraubwerkzeugs 7 und dem Einsetzen eines Schraubbits in die Bitaufnahme 18 wird eine in ein Werkstück einzuschraubende Schraube mit ihrem Schraubenkopf axial in Richtung des Schraubwerkzeugs 7 gewandt von der vom Schraubwerkzeug 7 abgewandten Stirnseite der Schraubenstützstruktur 1, 1a bis 1e her in die Schraubenstützstruktur 1, 1a bis 1e eingeführt, wodurch der entsprechende Schraubenkopf axial auf die entsprechenden Stützzungen 5, 5a bis 5e auftrifft und diese in Einsetzrichtung der Schraube axial elastisch gebogen werden. Bei einem weiteren axialen Einschieben der Schraube treffen entsprechende Werkzeugangriffsflächen des Schraubenkopfs der Schraube auf das Schraubbit axial auf, so dass die komplementären Werkzeugangriffsflächen des Schraubbits und des Schraubenkopfs axial ineinandergreifen. Die Stützzungen 5, 5a bis 5c, die durch den breiten Schraubenkopf achsparallel zur Schraubachse S elastisch umgebogen wurden, stellen sich hinter dem Schraubenkopf zwangsläufig wieder zumindest weitgehend in Richtung der unbelasteten Ausgangslage zurück, so dass sie einen entsprechenden Schraubendurchmesser axial unterhalb des Schraubenkopfs radial stützen. Da der Bitträger 17 zusammen mit dem Schraubbit durch den Schraubenkopf axial in dem Schraubwerkzeug 7 zurückgedrückt werden kann gegen die Federkraft der Schraubendruckfeder 21, ist der Schraubenkopf zwangsläufig zwischen den entsprechenden Werkzeugangriffsflächen des Schraubbits und den Stützzungen 5, 5a bis 5e axial eingeklemmt, wobei sich ein Kräftegleichgewicht zwischen der axialen Stützfunktion der elastisch nachgiebigen Stützzungen einerseits und der Federbeaufschlagung der Bitträgers 17 andererseits ergibt.

Die Schraubenstützstruktur 1, 1a bis 1e und das Schraubwerkzeug 7 bilden in aneinander montiertem Zustand ein Werkzeugsystem im Sinne der Erfindung. Wenn dieses Werkzeugsystem mit zwischen Schraubbit und Stützzungen 5, 5a bis 5e eingesetzter Schraube nun an ein Werkstück herangeführt wird - selbstverständlich in eingespanntem Betriebszustand der Trägerwelle 8 an einem Spannfutter einer Bohr- oder Schraubmaschine - dann kann durch entsprechende Betätigung der Bohr- oder Schraubmaschine in einem Einhandbetrieb die entsprechende Schraube in das Werkstück eingeschraubt werden. Sobald die distale Stirnseite der Schraubenstützstruktur 1, 1a bis 1e auf das Werkstück auftrifft, weicht die Schraubenstützstruktur 1e mit dem axial federbelastet beweglichen Hülsenteil 14 und gegebenenfalls noch zusätzlich mittels des Stützteils 13 axial gegenüber dem Vorschub der Schraube und dem Bitträger 17 zurück, so dass sich der Bitträger 17 mit dem Schraubbit gegenüber der Schraubenstützstruktur 1, 1a bis 1e axial verschiebt in Richtung des Werkstücks. Je weiter die Schraube in das Werkstück eingeschraubt ist, umso weiter durchdringt der Schraubenkopf den Freiraum zwischen den Stützzungen 5, 5a bis 5e wieder axial, wodurch die Stützzungen 5a bis 5e sich in entsprechender Weise entgegengesetzt axial elastisch durchbiegen. Nachdem der Schraubenkopf den Freiraum der Stützzungen 5, 5a bis 5e axial vollständig durchdrungen hat, springen die Stützzungen 5, 5a bis 5e zwangsläufig wieder in ihre unbelastete und radial ausgerichtete Ausgangslage zurück, wodurch der Schraubenkopf aus der Schraubenstützstruktur 1, 1a bis 1e freikommt. Nun kann das Schraubwerkzeug 7 einschließlich der Schraubenstützstruktur 1, 1a bis 1e von dem Werkstück entfernt werden.

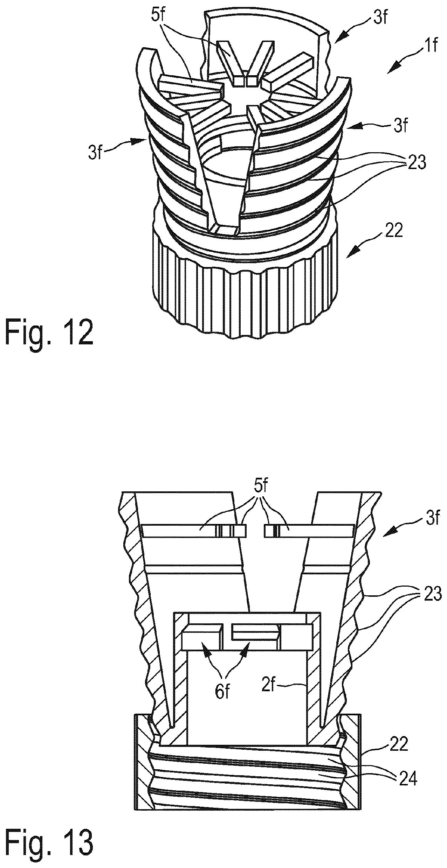

Eine Schraubenstützstruktur 1f (nicht gemäß der beanspruchten Erfindung) gemäß den Fig. 12 und 13 wird in gleicher Weise für ein Schraubenwerkzeug eingesetzt, wie dies zuvor anhand der Fig. 1 bis 11 bereits beschrieben wurde. Funktionsgleiche Bauteile und Abschnitte sind mit gleichen Bezugszeichen unter Hinzufügung des Buchstabens f versehen. Die Schraubenstützstruktur 1f weist einen Sicherungsring 2f auf, der mit Hilfe von Bajonettverschlussprofilierungen 6f auf komplementären Bajonettschlussprofilierungen eines Hülsenteils des Schraubwerkzeugs befestigbar ist. Dies erfolgt in gleicher Weise wie zuvor anhand der Ausführungsformen gemäß den Fig. 1 bis 12 beschrieben. Nachfolgend wird auf die Unterschiede der Schraubenstützstruktur 1f gemäß den Fig. 12 und 13 eingegangen.

Wesentlicher Unterschied ist es, dass die Ringstruktur 3f gemäß den Fig. 12 und 13 einen stufenlos veränderbaren Durchmesser aufweist. Die Ringstruktur 3f wird durch drei über den Umfang der Ringstruktur verteilt und zueinander beabstandet angeordnete Ringabschnitte gebildet, die nach Art von Ringabschnittlaschen gestaltet und über einen unteren Ringbereich miteinander verbunden sind. Die Ringabschnittlaschen ragen in unbelasteter Ausgangsstellung gemäß den Fig. 12 und 13 konisch nach außen ab, so dass sich ihr Abstand in Umfangsrichtung zueinander in Schraubrichtung des Schraubwerkzeugs verändert. Dabei erweitert sich die Ringstruktur zu einem distalen Stirnende der Schraubenstützstruktur 1f hin, d.h. zu einem von dem Schraubwerkzeug weg gerichteten Stirnende. Alle drei Ringabschnitte sind jeweils mit radial nach innen abragenden Stützzungen 5f versehen, die analog der zuvor beschriebenen Stützzungen ausgeführt sind.

Alle drei Ringabschnitte der Ringstruktur 3f weisen an ihrem Außenumfang ein Außengewinde auf, das sich zu einem proximalen Ende der Ringstruktur 3f hin fortsetzt, an dem die Ringabschnitte der Ringstruktur 3f einstückig an dem Sicherungsring 2f außenseitig angeformt sind. Alle drei Ringabschnitte sind radial elastisch nachgiebig gestaltet. Auf das Außengewinde der Ringstruktur 3f ist ein Stellelement in Form einer ringförmigen Stellhülse 22 aufgeschraubt, die mit einem zu dem Außengewinde 23 der Ringabschnitte komplementären Innengewinde 24 versehen ist. Die Stellhülse 22 ist koaxial zu einer Schraubachse des Schraubwerkzeugs auf das Außengewinde 23 der Ringabschnitte der Ringstruktur 3f aufgeschraubt.

Anhand der Fig. 13 ist eine axial proximale Endstellung der Stellhülse 22 gezeigt. Wenn die Stellhülse 22 ausgehend von dieser Endstellung in Richtung des distalen Stirnendes der Ringstruktur 3f geschraubt wird, werden zwangsläufig die Ringabschnitte der Ringstruktur 3f radial nach innen verlagert, wodurch sich eine stufenlose Veränderung des Durchmessers der Ringstruktur 3f ergibt. Je nach Gestaltung der Stützzungen 5f verändert sich damit auch ein Durchmesser des Freiraumes, den die Stützzungen 5f in einer Radialebene relativ zur Schraubachse des Schraubwerkzeugs umgrenzen. Hierdurch sind Schraubenköpfe mit unterschiedlich großem Durchmesser stützbar abhängig von der Radialverlagerung der Ringabschnitte der Ringstruktur 3f mit Hilfe der Stützhülse 22.

## Patentansprüche

1. Schraubenstützstruktur (1, 1a bis 1e) für ein Schraubwerkzeug (7) mit einem Sicherungsring (2, 2a bis 2e) zur lösbaren Festlegung der Schraubenstützstruktur (1, 1a bis 1e) an dem Schraubwerkzeug (7), sowie mit elastisch nachgiebigen Stützzungen (5, 5a bis 5e) zur Stützung eines Schraubenkopfs einer Schraube für ein Einschrauben der Schraube in ein Werkstück, wobei die Stützzungen (5, 5a bis 5e) an einer Ringstruktur (3, 3a bis 3e) in Umfangsrichtung verteilt zueinander angeordnet und radial zu einer Schraubachse (S) hin nach innen gerichtet sind, wobei der Sicherungsring (2, 2a bis 2e) und die Ringstruktur (3, 3a bis 3e) drehfest zueinander angeordnet sind, und dass die Stützzungen (5, 5a bis 5e) derart frei radial nach innen zu der Schraubachse (S) hin abragen, dass sie bei einer relativen Axialbewegung zwischen der Schraube und der Ringstruktur (3, 3a bis 3e) axial elastisch deformiert werden, **dadurch gekennzeichnet, dass** die radial nach innen ragenden Stützzungen (5,5a bis 5e) in wenigstens zwei zueinander parallelen Radialebenen an der Ringstruktur (3, 3a bis 3e) angeordnet sind.

2. Schraubenstützstruktur (1, 1a bis 1e) nach Anspruch 1, **dadurch gekennzeichnet, dass** der Sicherungsring (2, 2a bis 2e) und die Ringstruktur (3, 3a bis 3e) formsteif ausgeführt sind.

3. Schraubenstützstruktur (1, 1a bis 1e) nach Anspruch 1 oder 2, **dadurch gekennzeichnet, dass** der Sicherungsring (2, 2a bis 2e) und die Ringstruktur (3, 3a bis 3e) einstückig zueinander gestaltet sind.

4. Schraubenstützstruktur (1, 1a bis 1e) nach einem der vorhergehenden Ansprüche, **dadurch gekennzeichnet, dass** die Stützzungen (5, 5a bis 5e) einstückig an der Ringstruktur (3, 3a bis 3e) angeformt sind.

5. Schraubenstützstruktur (1, 1a bis 1e) nach einem der vorhergehenden Ansprüche, **dadurch gekennzeichnet, dass** die Ringstruktur (3, 3a bis 3e) einen größeren Durchmesser aufweist als der Sicherungsring (2, 2a bis 2e).

6. Schraubenstützstruktur (1, 1a bis 1e) nach einem der vorhergehenden Ansprüche, **dadurch gekennzeichnet, dass** der Sicherungsring (2, 2a bis 2e) mit Halteprofilierungen (6, 6a bis 6e) zur lösbaren Verbindung des Sicherungsrings (2, 2a bis 2e) an komplementären Halteprofilierungen eines Außenumfangs des Schraubwerkzeugs (7) versehen ist.

7. Schraubenstützstruktur (1, 1a bis 1e) nach Anspruch 6, **dadurch gekennzeichnet, dass** die Halteprofilierungen als Bajonettverschlussprofilierungen ausgebildet sind.

8. Schraubenstützstruktur (1, 1a bis 1e) nach einem der vorhergehenden Ansprüche, **dadurch gekennzeichnet, dass** die Stützzungen (5, 5a bis 5e) zu einer Mitte der Ringstruktur (3, 3a bis 3e) hin frei radial abragen, und dass freie Stirnenden der Stützzungen (5, 5a bis 5e) einen Freiraum umgrenzen, dessen Durchmesser kleiner als ein Durchmesser eines Schraubenkopfs einer zu stützenden Schraube ist.

9. Schraubenstützstruktur (1f) nach einem der vorhergehenden Ansprüche, **dadurch gekennzeichnet, dass** die Ringstruktur (3f) mit den daran angebrachten Stützzungen (5f) einen veränderbaren Durchmesser aufweist, der vorzugsweise stufenlos oder stufenweise verstellbar ausgeführt ist.

10. Werkzeugsystem mit einem Schraubwerkzeug (7) und mit wenigstens einer Schraubenstützstruktur (1, 1a bis 1e) nach einem der vorhergehenden Ansprüche, wobei die Schraubenstützstruktur (1, 1a bis 1e) lösbar mit dem Schraubwerkzeug (7) verbindbar ist, **dadurch gekennzeichnet, dass** das Schraubwerkzeug (7) zur Aufnahme eines Schraubbits einen Bitträger (17) aufweist, der relativ zu einer Trägerwelle (8) des Schraubwerkzeugs (7) federkraftbeaufschlagt axial beweglich gelagert ist.

11. Werkzeugsystem nach Anspruch 10, **dadurch gekennzeichnet, dass** ein axialer Abstand der Stützzungen (5, 5a bis 5e) zu dem Bitträger (17) in montiertem Zustand der Schraubenstützstruktur (1, 1a bis 1e) derart gewählt ist, dass ein Schraubenkopf einer axial durch die Stützzungen (5, 5a bis 5e) hindurchgeschobenen Schraube in Eingriff mit dem Schraubbit in dem Bitträger (17) ist derart, dass eine Federkraft des federkraftbeaufschlagten Bitträgers (17) das Schraubbit und den Schraubenkopf axial gegen die Stützzungen (5, 5a bis 5e) gedrückt hält.

12. Werkzeugsystem nach Anspruch 10 oder 11, **dadurch gekennzeichnet, dass** mehrere Schraubenstützstrukturen (1, 1a bis 1e) mit zueinander identischen Sicherungsringen (2, 2a bis 2e) und mit zueinander unterschiedlichen Stützzungen (5, 5a bis 5e) zur Stützung von Schrauben mit unterschiedlichen Schraubenköpfen vorgesehen sind, die alternativ zueinander mit dem Schraubwerkzeug (7) lösbar verbindbar sind.

13. Werkzeugsystem nach einem der Ansprüche 10 bis 12, **dadurch gekennzeichnet, dass** das Schraubwerkzeug (7) einen außenseitigen Hülsenabschnitt (14) aufweist, der mit den zu den Halteprofilierungen des Sicherungsrings (2, 2a bis 2e) der Schraubenstützstruktur (1, 1a bis 1e) komplementären Halteprofilierungen versehen ist.

14. Werkzeugsystem nach Anspruch 13, **dadurch gekennzeichnet, dass** der Hülsenabschnitt (14) relativ zu der Trägerwelle (8) des Schraubwerkzeugs (7) federelastisch axial nachgiebig ausgeführt ist.

## Claims

1. Screw supporting structure (1, 1a to 1e) for a tightening tool (7) with a securing ring (2, 2a to 2e) for the releasable fixing of the screw supporting structure (1, 1a to 1e) on the tightening tool (7), and with elastically resilient supporting tongues (5, 5a to 5e) for supporting a screw head of a screw for screwing the screw into a workpiece, the supporting tongues (5, 5a to 5e) being arranged distributed with respect to one another in the circumferential direction on a ring structure (3, 3a to 3e) and being directed radially inwards towards a screwing axis (S), the securing ring (2, 2a to 2e) and the ring structure (3, 3a to 3e) being arranged so as not to rotate with respect to one another, and the supporting tongues (5, 5a to 5e) protruding freely radially inwards towards the screwing axis (S) in such a way that they are deformed axially elastically in the case of a relative axial movement between the screw and the ring structure (3, 3a to 3e), **characterized in that** the radially inwardly protruding supporting tongues (5, 5a to 5e) are arranged in at least two radial planes which are parallel to one another on the ring structure (3, 3a to 3e).

2. Screw supporting structure (1, 1a to 1e) according to Claim 1, **characterized in that** the securing ring (2, 2a to 2e) and the ring structure (3, 3a to 3e) are of dimensionally stable configuration.

3. Screw supporting structure (1, 1a to 1e) according to Claim 1 or 2, **characterized in that** the securing ring (2, 2a to 2e) and the ring structure (3, 3a to 3e) are designed in one piece with respect to one another.

4. Screw supporting structure (1, 1a to 1e) according to one of the preceding claims, **characterized in that** the supporting tongues (5, 5a to 5e) are integrally formed in one piece on the ring structure (3, 3a to 3e).

5. Screw supporting structure (1, 1a to 1e) according to one of the preceding claims, **characterized in that** the ring structure (3, 3a to 3e) has a greater diameter than the securing ring (2, 2a to 2e).

6. Screw supporting structure (1, 1a to 1e) according to one of the preceding claims, **characterized in that** the securing ring (2, 2a to 2e) is provided with holding profiles (6, 6a to 6e) for releasably connecting the securing ring (2, 2a to 2e) to complementary holding profiles of an outer circumference of the tightening tool (7).

7. Screw supporting structure (1, 1a to 1e) according to Claim 6, **characterized in that** the holding profiles are configured as bayonet lock profiles.

8. Screw supporting structure (1, 1a to 1e) according to one of the preceding claims, **characterized in that** the supporting tongues (5, 5a to 5e) protrude freely radially towards a centre of the ring structure (3, 3a to 3e), and **in that** free front ends of the supporting tongues (5, 5a to 5e) surround a clearance, the diameter of which is smaller than a diameter of a screw head of a screw to be supported.

9. Screw supporting structure (1f) according to one of the preceding claims, **characterized in that** the ring structure (3f) with the supporting tongues (5f) which are attached to it has a variable diameter which is preferably configured so as to be adjustable in an infinitely variable or stepped manner.

10. Tool system with a tightening tool (7) and with at least one screw supporting structure (1, 1a to 1e) according to one of the preceding claims, it being possible for the screw supporting structure (1, 1a to 1e) to be connected releasably to the tightening tool (7), **characterized in that** the tightening tool (7) has, in order to receive a screwing bit, a bit carrier (17) which is mounted such that it can be moved axially relative to a carrier shaft (8) of the tightening tool (7) in a manner which is loaded with spring force.

11. Tool system according to Claim 10, **characterized in that** an axial spacing of the supporting tongues (5, 5a to 5e) from the bit carrier (17) is selected in a mounted state of the screw supporting structure (1, 1a to 1e) in such a way that a screw head of a screw which is pushed axially through the supporting tongues (5, 5a to 5e) is in engagement with the screwing bit in the bit carrier (17) in such a way that a spring force of the bit carrier (17) which is loaded with spring force holds the screwing bit and the screw head pressed axially against the supporting tongues (5, 5a to 5e).

12. Tool system according to Claim 10 or 11, **characterized in that** a plurality of screw supporting structures (1, 1a to 1e) with securing rings (2, 2a to 2e) which are identical to one another and with supporting tongues (5, 5a to 5e) which are different from one another are provided for supporting screws with different screw heads which, as an alternative to one another, can be connected releasably to the tightening tool (7).

13. Tool system according to one of Claims 10 to 12, **characterized in that** the tightening tool (7) has an outer-side sleeve portion (14) which is provided with the holding profiles which are complementary with respect to the holding profiles of the securing ring (2, 2a to 2e) of the screw supporting structure (1, 1a to 1e).

14. Tool system according to Claim 13, **characterized in that** the sleeve portion (14) is configured so as to be axially resilient in a spring-elastic manner relative to the carrier shaft (8) of the tightening tool (7).

## Revendications

1. Structure de support de vis (1, 1a à 1e) pour un outil de vissage (7), comprenant une bague de retenue (2, 2a à 2e) destinée à la fixation amovible de la structure de support de vis (1, 1a à 1e) sur l'outil de vissage (7), ainsi que des languettes de support (5, 5a à 5e) élastiquement flexibles pour le support d'une tête de vis d'une vis en vue d'un vissage de la vis dans une pièce, les languettes de support (5, 5a à 5e) étant disposées les unes par rapport aux autres, réparties dans la direction circonférentielle, sur une structure annulaire (3, 3a à 3e) et étant orientées radialement vers l'intérieur vers un axe de vis (S), la bague de retenue (2, 2a à 2e) et la structure annulaire (3, 3a à 3e) étant disposées de manière solidaire en rotation l'une de l'autre, et les languettes de support (5, 5a à 5e) faisant librement saillie radialement vers l'intérieur vers l'axe de vis (S) de telle sorte qu'elles sont déformées élastiquement dans la direction axiale lors d'un mouvement axial relatif entre la vis et la structure annulaire (3, 3a à 3e), **caractérisée en ce que** les languettes de support (5, 5a à 5e) faisant saillie radialement vers l'intérieur sont disposées sur la structure annulaire (3, 3a à 3e) dans au moins deux plans radiaux parallèles entre eux.

2. Structure de support de vis (1, 1a à 1e) selon la revendication 1, **caractérisée en ce que** la bague de retenue (2, 2a à 2e) et la structure annulaire (3, 3a à 3e) sont réalisées de manière rigide.

3. Structure de support de vis (1, 1a à 1e) selon la revendication 1 ou 2, **caractérisée en ce que** la bague de retenue (2, 2a à 2e) et la structure annulaire (3, 3a à 3e) sont réalisées d'une seule pièce l'une avec l'autre.

4. Structure de support de vis (1, 1a à 1e) selon l'une des revendications précédentes, **caractérisée en ce que** les languettes de support (5, 5a à 5e) sont formées d'une seule pièce avec la structure annulaire (3, 3a à 3e).

5. Structure de support de vis (1, 1a à 1e) selon l'une des revendications précédentes, **caractérisée en ce que** la structure annulaire (3, 3a à 3e) présente un diamètre plus grand que celui de la bague de retenue (2, 2a à 2e).

6. Structure de support de vis (1, 1a à 1e) selon l'une des revendications précédentes, **caractérisée en ce que** la bague de retenue (2, 2a à 2e) est pourvue de profilages de retenue (6, 6a à 6e) destinés à la liaison amovible de la bague de retenue (2, 2a à 2e) avec des profilages de retenue complémentaires d'une périphérie extérieure de l'outil de vissage (7).

7. Structure de support de vis (1, 1a à 1e) selon la revendication 6, **caractérisée en ce que** les profilages de retenue sont réalisés sous forme de profilages de verrouillage à baïonnette.

8. Structure de support de vis (1, 1a à 1e) selon l'une des revendications précédentes, **caractérisée en ce que** les languettes de support (5, 5a à 5e) font librement saillie radialement vers un centre de la structure annulaire (3, 3a à 3e), et **en ce que** les extrémités frontales libres des languettes de support (5, 5a à 5e) délimitent un espace libre dont le diamètre est inférieur au diamètre d'une tête de vis d'une vis à supporter.

9. Structure de support de vis (1f) selon l'une des revendications précédentes, **caractérisée en ce que** la structure annulaire (3f), avec les languettes de support (5f) qui y sont fixées, présente un diamètre variable, lequel est réalisé de préférence de manière réglable en continu ou par paliers.

10. Système d'outil comprenant un outil de vissage (7) et au moins une structure de support de vis (1, 1a à 1e) selon l'une des revendications précédentes, la structure de support de vis (1, 1a à 1e) pouvant être reliée de manière amovible à l'outil de vissage (7), **caractérisé en ce que** l'outil de vissage (7) comporte, pour la réception d'un embout de vissage, un porte-embout (17) monté de manière mobile axialement sous l'action d'une force de ressort par rapport à un arbre support (8) de l'outil de vissage (7).

11. Système d'outil selon la revendication 10, **caractérisé en ce qu'**une distance axiale entre les languettes de support (5, 5a à 5e) et le porte-embout (17), à l'état monté de la structure de support de vis (1, 1a à 1e), est choisie de telle sorte qu'une tête de vis d'une vis poussée axialement à travers les languettes de support (5, 5a à 5e) est en prise avec l'embout de vissage dans le porte-embout (17), de telle sorte qu'une force de ressort du porte-embout (17) sollicité par ressort maintient l'embout de vissage et la tête de vis pressés axialement contre les languettes de support (5, 5a à 5e).

12. Système d'outil selon la revendication 10 ou 11, **caractérisé en ce que** plusieurs structures de support de vis (1, 1a à 1e) avec des bagues de retenue (2, 2a à 2e) identiques les unes aux autres et avec des languettes de support (5, 5a à 5e) différentes les unes des autres pour le support de vis présentant différentes têtes de vis sont prévues, lesquelles peuvent être reliées de manière amovible à l'outil de vissage (7) alternativement les unes aux autres.

13. Système d'outil selon l'une des revendications 10 à 12, **caractérisé en ce que** l'outil de vissage (7) comporte une section de douille extérieure (14) qui est pourvue de profilages de retenue complémentaires des profilages de retenue de la bague de retenue (2, 2a à 2e) de la structure de support de vis (1, 1a à 1e).

14. Système d'outil selon la revendication 13, **caractérisé en ce que** la section de douille (14) est réalisée de manière axialement flexible élastiquement sous l'effet d'un ressort par rapport à l'arbre support (8) de l'outil de vissage (7).
